# EUROPÄISCHE PATENTANMELDUNG

(11) **EP 1 484 155 A1**
(43) Veröffentlichungstag der Anmeldung: **08.12.2004**
(21) Anmeldenummer: 04013407.4
(22) Anmeldetag: 07.06.2004
(51) Int. Cl.: B29C 45/17, B29C 45/00, B65B 55/02

(54) **Verfahren und Vorrichtung zum Herstellen von Saugern**

(30) Priorität: 05.06.2003 DE 10325458
(71) Anmelder: MAPA GmbH, Gummi- und Plastikwerke, D-27404 Zeven (DE)
(72) Erfinder: Maar, Günter, D-21244 Rosengarten (DE); Wagenknecht, Uwe, D-21255 Tostedt (DE)
(74) Vertreter: Patentanwälte Hauck, Graalfs, Wehnert, Döring, Siemons, Schildberg

(57) **Zusammenfassung**

Verfahren zum Herstellen von Saugern, bei dem unter Reinraumbedingungen Sauger spritzgegossen und keimfrei verpackt werden.

## Beschreibung

Die Erfindung bezieht sich auf ein Verfahren und auf eine Vorrichtung zum Herstellen von Saugern.

Sauger dienen in der Ausführung als Trinksauger der Ernährung von Säuglingen und in der Ausführung als Beruhigungssauger ihrer Beruhigung. Die vorliegende Anmeldung bezieht sich auf beide Ausführungen. Sauger für Verwendung in Geburtskliniken und Kinderstationen von Kliniken müssen keimfrei zur Verfügung gestellt werden. Die Sterilisation solcher Sauger in der Klinik, z.B. mit Wasserstoff bzw. Gammastrahlung, ist aufwendig.

Davon ausgehend liegt der Erfindung die Aufgabe zugrunde, ein Verfahren und eine Vorrichtung zur Verfügung zu stellen, die die Bereitstellung von Saugern für den Klinikgebrauch erleichtern.

Die Aufgabe wird durch ein Verfahren mit den Merkmalen des Anspruches 1 und durch eine Vorrichtung mit den Merkmalen des Anspruches 26 gelöst. Vorteilhafte Ausgestaltungen des Verfahrens und der Vorrichtung sind in den Unteransprüchen angegeben.

Bei dem erfindungsgemäßen Verfahren zum Herstellen von Saugern werden unter Reinraumbedingungen Sauger spritzgegossen und keimfrei verpackt.

Dadurch, daß die erfindungsgemäßen Sauger, bei denen es sich um Trinksauger oder Beruhigungssauger handeln kann, unter Reinraumbedingungen spritzgegossen und keimfrei verpackt werden, werden diese Sauger keimfrei hergestellt und bis zum Einsatz in der Klinik keimfrei gehalten. Eine nachträgliche Sterilisation beim Herstellen bzw. vor Ersteinsatz im Klinikbereich ist nicht erforderlich. Die Sauger können nach Gebrauch entsorgt oder gegebenenfalls nach einer späteren Sterilisation wiederverwendet werden. Der Aufwand für die Versorgung von Säuglingen im Klinikbereich mit Saugern wird drastisch reduziert und eine erhebliche Verbesserung der Keimfreiheit von Saugern im Klinikbereich erzielt.

Gemäß einer Ausgestaltung werden die Sauger unter Reinraumbedingungen der Klasse A spritzgegossen und verpackt. Bei der Klasse A handelt es sich um die Reinheitsklasse bzw. Keimfreiheitsklasse A entsprechend GMP-Richtlinie. Unter Reinraumbedingungen der Klasse A dürfen maximal 100 Partikel der Größe 0,5 µm auf einem Kubikfuß vorhanden sein bzw. 3520 Partikel pro Kubikmeter. Die Klasse A entspricht der Reinraumklasse 100 entsprechend US-FED-STD209E und der ISO Class 5 entsprechend DIN ISO 14644-1.

Gemäß einer Ausgestaltung wird der Sauger in einem ersten Reinraumbereich unter Reinraumbedingungen der Klasse A spritzgegossen und verpackt, der innerhalb eines zweiten Reinraumbereiches, in dem Reinraumbedingungen der Klasse C herrschen, angeordnet ist. Bei der Klasse C handelt es sich um die Reinheitsklasse bzw. Keimfreiheitsklasse C entsprechend GMP-Richtinie. Bei Klasse C dürfen maximal 10.000 Partikel der Größe 0,5 µm auf einem Kubikfuß vorhanden sein bzw. 353.000 Partikel auf einem Kubikmeter. Die Klasse C entspricht der Reinraumklasse 10.000 entsprechend US-FED-STD209E und der ISO Class 7 entsprechend DIN ISO 14644-1. Durch die Anordnung des ersten Reinraumbereiches innerhalb des zweiten Reinraumbereiches wird der erste Reinraumbereich vor Kontaminationen geschützt und die Einhaltung von Reinraumbedingungen der Klasse A im ersten Reinraumbereich gefördert.

Gemäß einer Ausgestaltung wird die Luft aus dem zweiten Reinraumbereich gefiltert, so daß sie Reinraumbedingungen der Klasse A erfüllt, und dem ersten Reinraumbereich zugeführt. Hierauf basiert die Herstellung und Einhaltung von Reinraumbedingungen der Klasse A im ersten Reinraumbereich. Gemäß einer weiteren Ausgestaltung wird Umgebungsluft gefiltert, so daß sie Reinraumbedingungen der Klasse C erfüllt, und dem zweiten Reinraumbereich zugeführt. Hierauf basiert die Herstellung und Einhaltung von Reinraumbedingungen der Klasse C im zweiten Reinraumbereich.

Gemäß einer Ausgestaltung wird die Formmasse für die Sauger im zweiten Reinraumbereich dosiert und plastifiziert und dem ersten Reinraumbereich zugeführt. Somit werden beim eigentlichen Spritzgießen, d.h. beim Spritzen der plastifizierten Formmasse in ein Spitzgießwerkzeug, Reinraumbedingungen der Klasse A eingehalten.

Gemäß einer weiteren Ausgestaltung werden die verpackten Sauger durch den zweiten Reinraumbereich nach außen geführt und/oder geschleust. Dieses Herausführen und/oder Ausschleusen der Sauger wirkt einer Kontamination des ersten Reinraumbereichs weiter entgegen.

Gemäß einer Ausgestaltung wird das Verpackungsmaterial in einem dritten Reinraumbereich, in dem Reinraumbedingungen der Klasse B herrschen, bereitgestellt und dem ersten Reinraumbereich zugeführt. Bei der Klasse B handelt es sich um die Reinheitsklasse bzw. Keimfreiheitsklasse B gemäß GMP-Richtlinie. Dies entspricht maximal 100 Partikel der Größe 0,5 µm auf einem Kubikfuß bzw. 3.530 Partikel pro Kubikmeter. Klasse B ist gleichzusetzen mit Reinraumklasse 100 entsprechend US-FED-STD209E und ISO Class 5 gemäß DIN ISO 14644-1.

Gemäß einer Ausgestaltung ist das Verpackungsmaterial unter Reinraumbedingungen einer der Klasse A, B oder C hergestellt und im dritten Reinraumbereich bereitgestellt. Gemäß einer Ausgestaltung wird das Verpackungsmaterial nach einer Bestrahlung mit einer eventuell vorhandenen Keime abtötenden Strahlung dem ersten Reinraumbereich zugeführt. Die Bestrahlung erfolgt beispielsweise mit UV-Licht.

Gemäß einer Ausgestaltung erfolgt das Spritzgießen und Verpacken der Sauger und wahlweise das Dosieren und Plastifizieren der Formmasse und/oder das Herausführen und/oder Ausschleusen der verpackten Sauger und/oder das Bereitstellen und/oder Zuführen des Verpackungsmaterials automatisch. Die automatische Produktion vermeidet Kontaminationen des ersten und/oder zweiten und/oder dritten Reinraumbereichs durch den Menschen. Vorzugsweise wird die Produktion im ersten und/oder zweiten und/oder dritten Reinraumbereich mannlos durchgeführt.

Die Sauger werden beispielsweise aus einem einzigen Material hergestellt, insbesondere bei Ausführung als Trinksauger. Die Sauger bestehen z.B. aus einem beliebigen Material, das spritzgegossen werden kann. Die Sauger bestehen beispielsweise aus Silikon, einem thermoplastischen Elastomer oder einem anderen weichelastischen Kunststoff.

Gemäß einer Ausgestaltung werden die Sauger im Mehrkomponenten-Spritzgußverfahren aus mindestens einer Hartkomponente und mindestens einer Weichkomponente hergestellt, vorzugsweise im Zweikomponenten (2K)-Spritzgußverfahren, d.h. aus zwei Komponenten. Die Hartkomponente bildet z.B. einen Schraubring oder einen wesentlichen Teil eines Schraubringes der Trinksauger und die Weichkomponente bildet z.B. einen Nippel, eine Tülle und ggf. eine Beschichtung des Schraubringes der Trinksauger. Bei Beruhigungssaugern bildet z.B. die Hartkomponente das Mundschild und ggfs. einen in einen Nippel eingebetteten Sicherheitsstreifen und die Weichkomponente den Nippel und gegebenenfalls eine Beschichtung des Mundschildes. Entsprechende Sauger und Verfahren zu deren Herstellung sind insbesondere in der DE 195 20 540 C2 und der DE 42 29 224 C2 beschrieben, deren Inhalt durch Bezugnahme in die vorliegende Anmeldung aufgenommen wird.

Die Hartkomponente ist z.B. PP, PE oder ein anderes Polyolefin. Die Weichkomponente ist z.B. Silikon oder ein thermoplastisches Elastomer (TPE). Das thermoplastische Elastomer ist z.B. SEBS. Gemäß einer Ausgestaltung umfassen die Sauger eine Hartkomponente aus Polypropylen und eine Weichkomponente aus SEBS. Die Verbindung zwischen Hartkomponente und Weichkomponente kann durch Formschluß und/oder Kraftschluß und/oder Stoffschluß erfolgen. Für eine stoffschlüssige Verbindung wird z.B. eine Hartkomponente mit einem damit vernetzbaren thermoplastischen Elastomer herangezogen.

Gemäß einer Ausgestaltung wird zunächst eine Hartkomponente und dann eine Weichkomponente der Sauger spritzgegossen. Hierbei wird z.B. eine harte Tragstruktur mit einem Weichmaterial beschichtet bzw. verbunden.

Die Keimfreiheit der Sauger kann durch Sterilisieren vor dem Verpacken hergestellt werden. Gemäß einer vorteilhaften Ausgestaltung werden die Sauger unter Temperatur- und Druckbedingungen spritzgegossen, bei denen Mikroorganismen abgetötet werden und die Keimfreiheit beim Spritzgießen hergestellt. Gemäß einer Ausgestaltung werden die Sauger bei Temperaturen von etwa 220 bis 260 °C spritzgegossen. Bei der Herstellung der Sauger im Zweikomponenten-Spritzgußverfahren unter Verwendung von Polypropylen und einem thermoplastischen Elastomer sind im Plastifizierungsaggregat bzw. in der Spritzeinheit und während der Aushärtung in den Kavitäten des Spritzgießwerkzeuges der Spritzgießmaschine Temperaturen von etwa 240 °C erzielbar. Diese Bedingungen töten Mikroorganismen ab und ermöglichen es nicht, daß Keime an den Saugern verbleiben. Diese Keimfreiheit wird durch die Verpackung der Sauger unter Reinraumbedingungen in einer keimfreien Verpackung bis zur Anwendung beibehalten.

Bei Trinksaugem ist ein Trinkloch grundsätzlich nach dem Spritzgießen in den Sauger einbringbar. Gemäß einer Ausgestaltung werden die Sauger mit einem Trinkloch spritzgegossen, wodurch sich eine nachträgliche Einarbeitung des Trinkloches erübrigt und die Keimfreiheit der Sauger weiter gefördert wird. Hierfür weist z.B. das Spritzgießwerkzeug an geeigneter Stelle einen das Trinkloch begrenzenden Stift auf.

Eine Trinkflasche wird zumeist mit einer Belüftung ausgestattet, die meistens an den Saugern untergebracht ist. Eine Belüftungsöffnung ist z.B. zwischen Saugerflansch und Öffnungsrand der Flasche ausgebildet. Hierfür kann der Saugerflansch einen oder mehrere radiale Kanäle an seiner Unterseite aufweisen. Bekannt ist es auch, den Öffnungsquerschnitt der Belüftungsöffnung durch Einstellen des Schraubringes einzustellen, d.h. ein einstellbares Ventil vorzusehen. Entsprechende Kanäle sind an der Unterseite des Saugerflansches beim Spritzgießen einbringbar. Bekannt ist es auch, die Trinksauger an der Tülle mit einem Ventilschlitz zu versehen. Erfindungsgemäß wird ein Ventilschlitz nach dem Spritzgießen unter Reinraumbedingungen in die Sauger eingebracht. Hierdurch wird die Keimfreiheit auch bei einem nachträglichen Einbringen eines Ventilschlitzes gesichert. Gemäß einer Ausgestaltung wird der Ventilschlitz unter Reinraumbedingungen der Klasse A eingebracht. Gemäß einer Ausgestaltung wird er im ersten Reinraumbereich eingebracht.

Bestehen die Sauger aus nur einer Komponente, sind sie in einer einzigen Spritzform (bzw. "Spritzstation") spritzbar. Im Mehrkomponenten-Spritzgießverfahren sind Sauger in einer einzigen oder in mehreren Spritzformen spritzbar. Gemäß einer Ausgestaltung werden die Sauger in einer Spritzstation komplett gespritzt oder wird in einer ersten Spritzstation eine erste Komponente eingespritzt und die Vorspritzlinge aus der ersten Spritzstation in eine zweite Spritzstation transportiert und dort eine zweite Komponente eingespritzt und/oder die fertigen Spritzlinge von der (ggf. zweiten) Spritzstation in eine Schlitzstation transportiert und dort geschlitzt und/oder die geschlitzten Sauger von einer Schlitzstation in eine Verpackungsstation transportiert und dort verpackt.

Die Keimfreiheit wird durch eine luftdichte Verpackung aus keimfreiem Material gewährleistet. Gemäß einer Ausgestaltung ist das Verpackungsmaterial zumindest teilweise aus Kunststoff. Gemäß einer Ausgestaltung werden die Sauger in Folienmaterial versiegelt und damit luftdicht verpackt. Gemäß einer Ausgestaltung werden die Sauger in Blisterverpackungen verpackt.

Gemäß einer Ausgestaltung wird das Material für die Verpackung als Folienbahn keimfrei auf Rollen unter Reinraumbedingungen bereitgestellt.

Die fertig verpackten Sauger werden z.B. von Zeit zu Zeit aus dem Reinraum entnommen. Für eine kontinuierliche Produktion und zur Vermeidung von Verunreinigungen des Reinraumes bei einer Entnahme verpackter Sauger werden gemäß einer Ausgestaltung die verpackten Sauger aus dem Reinraumbereich ausgeschleust. Gemäß einer Ausgestaltung werden die verpackten Sauger außerhalb des Reinraumbereichs etikettiert und/oder mit einer Umverpackung versehen. Damit werden Verunreinigungen im Reinraumbereich durch Etikettierung bzw. weitere Verpackungsvorgänge vermieden, die an den keimfrei verpackten Saugern ohne Beeinträchtigung der Keimfreiheit durchführbar sind.

Die Vorrichtung, insbesondere zur Durchführung des Verfahrens nach einem der Ansprüche 1 bis 25, hat
- eine Einhausung, in der Reinraumbedingungen herstellbar sind,
- eine zumindest teilweise in der Einhausung angeordnete Spritzgießmaschine für die Herstellung von Saugern,
- mindestens eine in der Einhausung angeordnete Einrichtung zum Transportieren, in deren Arbeitsbereich sich die Spritzgießmaschine befindet, und
- eine zumindest teilweise in der Einhausung angeordnete Verpackungsmaschine, die sich im Arbeitsbereich der Einrichtung zum Transportieren befindet.

Die Spritzgießmaschine umfaßt Spritzeinheit, Spritzgießwerkzeug und Schließeinheit. In der Einhausung werden zumindest die Teile der für die Herstellung von Saugern notwendigen Vorrichtungen, wie Spritzgießmaschine und Verpackungsmaschine installiert, die mit den Saugern direkt in Kontakt kommen. Ferner enthält die Einhausung eine Einrichtung zum Transportieren, welche die von der Spritzgießmaschine hergestellten Sauger zur Verpackungsmaschine transportiert. Es sind für sämtliche Vorrichtungen, die von der keimfreien Herstellung bis zur keimfreien Verpackung benötigt werden, Reinraumbedingungen gewährleistet, so daß die Sauger in der Verpackung keimfrei vorliegen.

Die Einhausung erfüllt vorzugsweise die Reinraumklasse A nach c'GMP. Die Einhausung umgrenzt den ersten Reinraumbereich gemäß Anspruch 3. Der Prozeß von der Herstellung des Trinksaugers bis zu dessen Verpackung erfolgt also in einer partikelarmen Umgebung. Deshalb sind gemäß einer bevorzugten Ausgestaltung Einrichtungen zum Erzeugen von Reinraumbedingungen der Klasse A in der Einhausung vorhanden.

Gemäß einer Ausgestaltung befinden sich folgende Maschinen bzw. Anlagenteile innerhalb der Einhausung:
- der Werkzeugbereich der Spritzgießmaschine (Spritzgießwerkzeug und Schließeinheit),
- die Einrichtung zum Transportieren,
- wahlweise die Schlitzstation für die Realisierung eines Ventilschlitzes und
- der Einlegebereich der Verpackungsmaschine.

Gemäß einer Ausgestaltung ist die Spritzgießmaschine eine Mehrkomponenten-Spritzgießmaschine, z.B. eine 2K-Spritzgießmaschine. Die Herstellung eines 2K-Trinksaugers mit integralem Schraubring vereinfacht die Anwendung und reduziert das Risiko der Kontamination des Trinksaugers bei Gebrauch.

Gemäß einer Ausgestaltung ist die Spritzgießmaschine auf einem Schienenbett angeordnet, auf dem sie durch eine schließbare Öffnung der Einhausung herausfahrbar ist, z.B. um das Spritzgießwerkzeug zu wechseln. Gemäß einer weiteren Ausgestaltung hat die Spritzgießmaschine an jeder Seite der Schließeinheit ein Abdichtblech, um die Einhausung im ausgefahrenen und eingefahrenen Zustand der Spritzgießmaschine abzudichten.

Gemäß einer Ausgestaltung weist die Spritzgießmaschine mehrere (z.B. zwei) Spritzgießwerkzeuge zum Spritzen eines Mehrkomponenten-Saugers auf.

Gemäß einer Ausgestaltung ist die Einrichtung zum Transportieren ein Roboter. Geeignete Industrieroboter stehen zur Verfügung. Gemäß einer weiteren Ausgestaltung ist sie ein Sechs-Achs-Roboter.

Gemäß einer Ausgestaltung ist im Arbeitsbereich der Einrichtung zum Transportieren in der Einhausung eine Schlitzvorrichtung vorhanden. Diese Ausgestaltung bezieht sich auf Trinksauger mit Schlitzventil.

Gemäß einer Ausgestaltung ist die Verpackungsmaschine eine Blistermaschine.

Gemäß einer Ausgestaltung ist der Verpackungsmaschine vorzugsweise innerhalb einer weiteren Einhausung ein Rollenmagazin für Folienbahnen zugeordnet. Dieses umfaßt z.B. Unterfolienrollen und Oberfolienrollen, aus denen Blisterverpackungen in bekannter Weise gebildet werden. Das Rollenmagazin für die Folienbahnen befindet sich vorzugsweise im Bereich der Reinraumklasse B (nach c'GMP). Deshalb sind gemäß einer weiteren Ausgestaltung Einrichtungen zum Erzeugen von Reinraumbedingungen der Klasse B in der weiteren Einhausung vorhanden. Die weitere Einhausung umgrenzt den dritten Reinraumbereich gemäß Anspruch 7. Eventuell vorhandene Keime auf der Ober- und Unterfolie werden mittels UV-Licht oder einer anderen keimabtötenden Strahlung, welche unmittelbar vor dem Verschließen der Folien angeordnet ist, getötet. Deshalb sind gemäß einer weiteren Ausgestaltung Einrichtungen zum Bestrahlen der Folienbahnen mit einer keimabtötenden Strahlung vorhanden. Die Einrichtungen zum Bestrahlen sind beispielsweise in einem die weitere Einhausung mit der Einhausung verbindenden Bereich angeordnet.

Gemäß einer Ausgestaltung ist die Einhausung und ggfs. die weitere Einhausung innerhalb einer Reinraumzelle angeordnet, die sämtliche für den Prozeß notwendigen Anlagen, wie Spritzgießmaschine, Einrichtung zum Transportieren, Schlitzvorrichtung, Verpackungsmaschine und Rollenmagazin umfaßt. Innerhalb der Reinraumzelle kann überall Reinraumklasse C (nach c'GMP) gewährleistet werden, d.h. reine Umgebungsbedingungen. Deshalb sind gemäß einer Ausgestaltung Einrichtungen zum Erzeugen von Reinraumbedingungen der Klasse C in der Reinraumzelle vorhanden.

Der Einlegebereich der Verpackungsmaschine befindet sich vorzugsweise innerhalb der Einhausung im Bereich der Reinraumklasse A und der Rest der Verpackungsmaschine vorzugsweise in der Reinraumzelle im Bereich der Reinraumklasse C. Deshalb ist/sind gemäß einer Ausgestaltung die Einhausung und/oder die weitere Einhausung und/oder die Spritzeinheit der Spritzgießmaschine und/oder ein dem Einlegebereich einschließlich des Versiegelungsbereichs nachgeordneter Teil der Verpackungsmaschine innerhalb der Reinraumzelle angeordnet. Das Ende der Verpackungsmaschine kann durch eine Wand der Reinraumzelle nach außen geführt werden, so daß die verpackten Sauger die Reinraumzelle verlassen können.

Gemäß einer Ausgestaltung umfassen die Einrichtungen zum Erzeugen von Reinraumbedingungen der Klasse A und/oder B und/oder C Einrichtungen zum Filtern der in der Einhausung und/oder der in der weiteren Einhausung und/oder der in der Reinraumzelle vorhandenen und/oder der Einhausung und/oder der weiteren Einhausung und/oder der Reinraumzelle zugeführten Luft. Dabei wird z.B. die Luft in der Einhausung und/oder der weiteren Einhausung und/oder in der Reinraumzelle durch Einrichtungen zum Filtern umgewälzt. Gemäß einer weiteren Ausgestaltung filtern die Einrichtungen zum Filtern die Luft aus der Reinraumzelle und führen diese der Einhausung und/oder der weiteren Einhausung zu. Dies kann mit einer Umwälzung der Luft der Einhausung und/oder der weiteren Einhausung durch dieselben oder weitere Einrichtungen zum Filtern kombiniert werden. Gemäß einer weiteren Ausgestaltung filtern die Einrichtungen zum Filtern Umgebungsluft und führen diese der Reinraumzelle und/oder der weiteren Einhausung zu. Auch dies ist mit einer Umwälzung der Luft der Reinraumzelle und/oder der weiteren Einhausung durch dieselben oder weitere Einrichtungen zum Filtern kombinierbar.

Bevorzugt herrscht in der Einhausung und/oder der weiteren Einhausung und/oder der Reinraumzelle Überdruck, wodurch einer Kontamination dieser Reinraumbereiche weiter entgegengewirkt wird.

Gemäß einer weiteren Ausgestaltung sind die in der Einhausung und/oder weiteren Einhausung und/oder Reinraumzelle vorhandenen Maschinen validiert im Hinblick auf die dort vorhandenen Reinraumbedingungen. Dies bedeutet, daß die Partikelemission der besagten Maschinen unter den Grenzwerten bleiben, die den jeweiligen Reinheitsklassen zugeordnet sind. Demnach haben die im ersten Reinraumbereich angeordneten Maschinen Partikelemissionen von weniger 100 Partikel mit einem Durchmesser von 0,5 µm pro Kubikfuß.

Gemäß einer Ausgestaltung umfaßt die Einhausung und/oder die weitere Einhausung und/oder die Reinraumzelle mindestens eine schließbare Öffnung und/oder Schleuse. Durch die schließbare Öffnung und/oder Schleuse können Personen und/oder Materialien und/oder Sauger unter weitgehender Vermeidung von Kontamination nach innen bzw. nach außen gelangen.

Gemäß einer Ausgestaltung ist außerhalb der Einhausung und/oder weiteren Einhausung und/oder Reinraumzelle eine Vorrichtung zum Etikettieren und/oder eine Vorrichtung zum Umverpacken der Verpackung vorhanden.

Die Erfindung wird nachfolgend anhand der anliegenden Zeichnungen eines Ausführungsbeispieles erläutert. In den Zeichnungen zeigen:

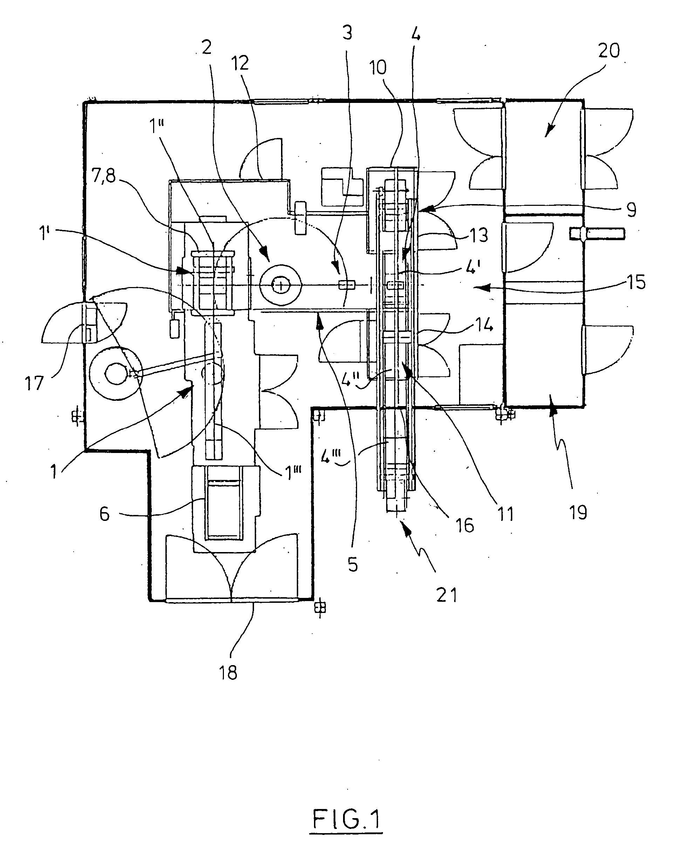

- Fig. 1: die Vorrichtung zur Durchführung des Verfahrens in einer grobschematischen Draufsicht;
- Fig. 2: dieselbe Vorrichtung mit einer Zuordnung der verschiedenen Reinraum-Bereiche.

Die Vorrichtung zum Herstellen von Saugern umfaßt eine 2K-Spritzgießmaschine 1, einen Roboter 2, eine Schlitzvorrichtung 3 und eine Blister-Verpackungsmaschine 4.

Ein 2K-Spritzgießwerkzeug 1' und eine Schließeinheit 1" der Spritzgießmaschine 1, die Schlitzvorrichtung 3 und der Einlegebereich 4' der Verpackungsmaschine 4 befinden sich im Arbeitsbereich des Roboters 2. Sie sind innerhalb einer Einhausung 5 (Reinraumklasse A) angeordnet.

Die Spritzeinheit 1"' befindet sich außerhalb der Einhausung 5, ebenso wie dem Einlegebereich 4' einschließlich des Versiegelungsbereiches nachgeordnet Teile 4", 4"' der Verpackungsmaschine 4.

Die Spritzgießmaschine 1 steht auf einem Schienenbett 6 und kann zum Werkzeugwechsel aus der Einhausung 5 herausgefahren werden. Die Spritzgießmaschine 1 hat an jeder Seite ihrer Schließeinheit 1" ein Abdichtblech 7, 8, um eine Abdichtung der Einhausung 5 im eingefahrenen und ausgefahrenen Zustand der Spritzgießmaschine 1 zu verwirklichen.

Ein Rollenmagazin 9 für Folienbahnen ist und ein Teil 4" der Verpackungsmaschine 4 sind in weiteren Einhausungen 10, 11 (Reinraumklasse B) angeordnet.

Die Einhausungen 5, 10 weisen schließbare Öffnungen 12, 13, 14 für einen Zugang auf.

Die vorbeschriebenen Vorrichtungen und Einhausungen sind insgesamt in einer Reinraumzelle 15 (Reinraumklasse C) angeordnet, wobei die Verpackungsmaschine 4 mit einem Teil 4'" durch eine schließbare Öffnung 16 der Reinraumzelle 15 hindurchgeführt ist. Die Reinraumzelle 15 ist mit weiteren schließbaren Öffnungen 17, 18 bzw. Schleusen 19, 20 für die Hindurchführung von Personen und/oder Material versehen.

Mittels dieser Vorrichtung wird zunächst die Hartkomponente in das Spritzgießwerkzeug 1' der Spritzgießmaschine 1 injiziert und dann die Weichkomponente. Danach entnimmt der Roboter 2 die Spritzlinge dem Spritzgießwerkzeug 1' und setzt sie in die Schlitzvorrichtung 3 ein. Dort wird das Ventil geschlitzt. Die Schlitzvorrichtung 3 verändert nach dem Erhitzen die Lage der Spritzlinge auf die Position der Foliensäcke, schwenkt sie um 180° und setzt sie in einen Foliensack einer Blisterverpackung im Einlegebereich der Verpackungsmaschine 4. Dort werden die Foliensäcke versiegelt und die Verpackungsmaschine 4 transportiert die fertig verpackten Teile aus der Reinraumzelle 15 heraus. Bei 21 sind die verpackten Sauger entnehmbar.

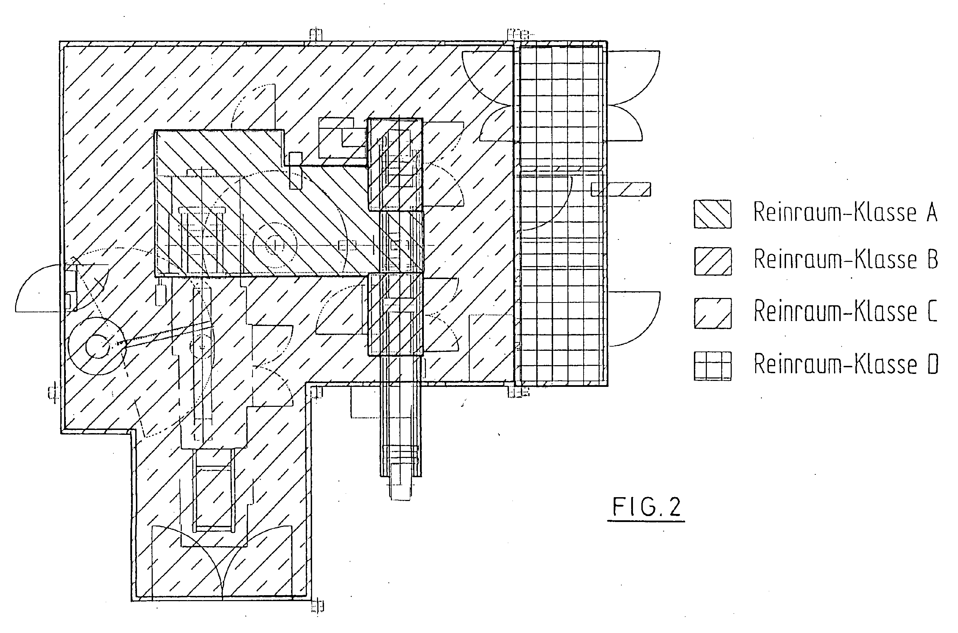

In der Fig. 2 sind die Reinraumbereiche der Klassen A, B, C und D durch verschiedene Schraffuren verdeutlicht, deren Zuordnung aus der Legende am Rande der Zeichnung gegeben sind.

## Patentansprüche

1. Verfahren zum Herstellen von Saugern, bei dem unter Reinraumbedingungen Sauger spritzgegossen und keimfrei verpackt werden.

2. Verfahren nach Anspruch 1, bei dem die Sauger unter Reinraumbedingungen der Klasse A spritzgegossen und verpackt werden.

3. Verfahren nach Anspruch 2, bei dem die Sauger in einem ersten Reinraumbereich unter Reinraumbedingungen der Klasse A spritzgegossen und verpackt werden, der innerhalb eines zweiten Reinraumbereiches, in dem Reinraumbedingungen der Klasse C herrschen, angeordnet ist.

4. Verfahren nach Anspruch 3, bei dem Luft aus dem ersten Reinraumbereich gefiltert, so daß sie Reinraumbedingungen der Klasse A erfüllt, und dem zweiten Reinraumbereich zugeführt wird.

5. Verfahren nach Anspruch 3 oder 4, bei dem die Formmasse für die Sauger im zweiten Reinraumbereich dosiert und plastifiziert und dem ersten Reinraumbereich zugeführt wird.

6. Verfahren nach einem der Ansprüche 3 bis 5, bei dem die verpackten Sauger durch den zweiten Reinraumbereich nach außen geführt und/oder geschleust werden.

7. Verfahren nach einem der Ansprüche 1 bis 6, bei dem das Verpackungsmaterial in einem dritten Reinraumbereich, in dem Reinraumbedingungen der Klasse B herrschen, bereitgestellt und dem ersten Reinraumbereich zugeführt wird.

8. Verfahren nach Anspruch 7, bei dem das Verpackungsmaterial nach einer Bestrahlung mit einer eventuell vorhandene Keime abtötenden Strahlung dem ersten Reinraumbereich zugeführt wird.

9. Verfahren nach einem der Ansprüche 1 bis 8, bei dem das Spritzgießen und Verpacken der Sauger und wahlweise das Einbringen eines Ventilschlitzes in den Sauger und/oder das Dosieren und Plastifizieren der Formmasse und/oder das Herausführen und/oder Ausschleusen der verpackten Sauger und/oder Bereitstellen und/oder Zuführen des Verpackungsmaterials automatisch erfolgt/erfolgen.

10. Verfahren nach einem der Ansprüche 1 bis 9, bei dem die Sauger im Mehrkomponenten-Spritzgußverfahren spritzgegossen werden.

11. Verfahren nach Anspruch 10, bei dem zunächst eine Hartkomponente und dann eine Weichkomponente der Sauger spritzgegossen wird.

12. Verfahren nach einem der Ansprüche 1 bis 11, bei dem die Sauger aus PP und/oder TPE spritzgegossen werden.

13. Verfahren nach einem der Ansprüche 1 bis 12, bei dem die Sauger unter Temperatur- und Druckbedingungen spritzgegossen werden, bei denen Mikroorganismen abgetötet werden.

14. Verfahren nach einem der Ansprüche 1 bis 13, bei dem die Sauger bei Temperaturen von etwa 220 bis 260 °C spritzgegossen werden.

15. Verfahren nach einem der Ansprüche 1 bis 13, bei dem die Sauger mit einem Trinkloch spritzgegossen werden.

16. Verfahren nach einem der Ansprüche 1 bis 15, bei dem nach dem Spritzgießen unter Reinraumbedingungen in die Sauger ein Ventilschlitz eingebracht wird.

17. Verfahren nach Anspruch 16, bei dem der Ventilschlitz im ersten Reinraumbereich eingebracht wird.

18. Verfahren nach einem der Ansprüche 1 bis 17, bei dem die Sauger in einer einzigen Spritzstation komplett gespritzt werden oder in einer ersten Spritzstation eine erste Komponente eingespritzt und die Vorspritzlinge aus der ersten Spritzstation in eine zweite Spritzstation transportiert und dort eine zweite Komponente eingespritzt wird und/oder die fertigen Spritzlinge von der (zweiten) Spritzstation in eine Schlitzstation transportiert und dort geschlitzt werden und/oder die geschlitzten Sauger von einer Schlitzstation in eine Verpackungsstation transportiert und dort verpackt werden.

19. Verfahren nach einem der Ansprüche 1 bis 18, bei dem die Sauger in einer Verpackung aus keimfreiem Material luftdicht verpackt werden.

20. Verfahren nach einem der Ansprüche 1 bis 19, bei dem die Sauger in Folienmaterial versiegelt werden.

21. Verfahren nach einem der Ansprüche 1 bis 20, bei dem die Sauger in einem Verpackungsmaterial verpackt werden, das zumindest teilweise aus Kunststoff besteht.

22. Verfahren nach einem der Ansprüche 1 bis 21, bei dem die Sauger in Blisterverpackungen verpackt werden.

23. Verfahren nach einem der Ansprüche 1 bis 22, bei dem das Material für die Verpackung als Folienbahn auf Rollen unter Reinraumbedingungen bereitgestellt wird.

24. Verfahren nach einem der Ansprüche 3 bis 23, bei dem die verpackten Sauger aus einem Reinraumbereich der Klasse A und/oder C ausgeschleust werden.

25. Verfahren nach einem der Ansprüche 3 bis 24, bei dem die verpackten Sauger außerhalb des Reinraumbereiches der Klasse A und/oder C etikettiert und/oder umverpackt werden.

26. Vorrichtung, insbesondere zur Durchführung des Verfahrens nach einem der Ansprüche 1 bis 25, mit
- einer Einhausung (5), in der Reinraumbedingungen herstellbar sind,
- einer in der Einhausung (5) zumindest teilweise angeordneten Spritzgießmaschine (1) für die Herstellung von Saugern,
- mindestens einer in der Einhausung (5) angeordneten Einrichtung zum Transportieren (2) , in deren Arbeitsbereich sich die Spritzgießmaschine (1) befindet, und
- einer in der Einhausung (5) zumindest teilweise angeordneten Verpackungsmaschine (4), die sich im Arbeitsbereich der Einrichtung zum Transportieren (2) befindet.

27. Vorrichtung nach Anspruch 26 mit Einrichtungen zum Erzeugen von Reinraumbedingungen der Klasse A in der Einhausung (5).

28. Vorrichtung nach Anspruch 26 oder 27, bei der der Werkzeugbereich der Spritzgießmaschine (1) und der Einlegebereich der Verpackungsmaschine (4) in der Einhausung (5) angeordnet sind.

29. Vorrichtung nach einem der Ansprüche 26 bis 28, bei der die Spritzgießmaschine (1) eine Mehrkomponenten-Spritzgießmaschine ist.

30. Vorrichtung nach einem der Ansprüche 26 bis 29, bei der die Spritzgießmaschine (1) auf einem Schienenbett (6) angeordnet ist, auf dem es durch eine schließbare Öffnung aus der Einhausung (5) herausfahrbar ist.

31. Vorrichtung nach einem der Ansprüche 26 bis 30, bei der die Spritzgießmaschine (1) mehrere Spritzstationen zum Spritzen eines Mehrkomponenten-Saugers aufweist, die sich im Arbeitsbereich der Einrichtung zum Transportieren (2) befinden.

32. Vorrichtung nach einem der Ansprüche 26 bis 31, bei der die Einrichtung zum Transportieren (2) ein Roboter ist.

33. Vorrichtung nach Anspruch 32, bei der der Roboter (2) ein Sechs-Achs-Roboter ist.

34. Vorrichtung nach einem der Ansprüche 26 bis 33, bei der im Arbeitsbereich der Einrichtung zum Transportieren (2) in der Einhausung (5) eine Schlitzvorrichtung (3) vorhanden ist.

35. Vorrichtung nach einem der Ansprüche 16 bis 34, bei der die Verpackungsmaschine (4) eine Blistermaschine ist.

36. Vorrichtung nach einem der Ansprüche 26 bis 35 mit einem Rollenmagazin (9) für Folienbahnen, das der Verpackungsmaschine (4) zugeordnet ist.

37. Vorrichtung nach Anspruch 36, bei der das Rollenmagazin (9) innerhalb einer weiteren Einhausung (10) angeordnet ist.

38. Vorrichtung nach Anspruch 37 mit Einrichtungen zum Erzeugen von Reinraumbedingungen der Klasse B in der weiteren Einhausung (10).

39. Vorrichtung nach einem der Ansprüche 26 bis 38, bei der die Einhausung (5) oder die weitere Einhausung (10) und/oder die Spritzeinheit (12') der Spritzgießmaschine (1) und/oder ein dem Einlegebereich (4') einschließlich des Versiegelungsbereichs nachgeordneter Teil (4", 4'") der Verpackungsmaschine (4) innerhalb einer Reinraumzelle (15) angeordnet ist/sind.

40. Vorrichtung nach Anspruch 39 mit Einrichtungen zum Erzeugen von Reinraumbedingungen der Klasse C in der Reinraumzelle (15).

41. Vorrichtung nach einem der Ansprüche 26 bis 40, bei der die Einrichtungen zum Erzeugen von Reinraumbedingungen der Klasse A und/oder B und/oder C Einrichtungen zum Filtern der in der Einhausung (5) und/oder der in der weiteren Einhausung (10) und/oder der in der Reinraumzelle (15) vorhandenen und/oder dieser zugeführten Luft umfassen.

42. Vorrichtung nach Anspruch 41, bei der die Einrichtungen zum Filtern die Luft aus der Reinraumzelle (15) filtern und der Einhausung (5) und/oder der weiteren Einhausung (10) zuführen.

43. Vorrichtung nach Anspruch 41 oder 42, bei der die Einrichtungen zum Filtern Umgebungsluft filtern und der Reinraumzelle (15) und/oder der weiteren Einhausung (10) zuführen.

44. Vorrichtung nach einem der Ansprüche 26 bis 43, bei der die in der Einhausung (5) und/oder weiteren Einhausung (10) und/oder Reinraumzelle (15) vorhandenen Maschinen validiert sind im Hinblick auf die dort vorhandenen Reinraumbedingungen.

45. Vorrichtung nach einem der Ansprüche 26 bis 44, bei der die Einhausung (5) und/oder die weitere Einhausung (10) und/oder die Reinraumzelle (15) mindestens eine schließbaren Öffnung (12, 13, 14, 16, 18) und/oder mindestens eine Schleuse (19, 20) umfaßt/umfassen.

46. Vorrichtung nach einem der Ansprüche 26 bis 45, bei der außerhalb der Einhausung (5) und/oder die weitere Einhausung (10) und/oder die Reinraumzelle (15) eine Vorrichtung zum Etikettieren und/oder eine Vorrichtung zum Umverpacken der Verpackung vorhanden ist.
